(19) **Europäisches Patentamt**

**European Patent Office**

**Office européen des brevets**

(11) **EP 0 543 056 B1**

(12) **EUROPEAN PATENT SPECIFICATION**

(45) Date of publication and mention
of the grant of the patent:
**05.02.1997 Bulletin 1997/06**

(51) Int Cl.6: **G01K 7/00**, G05F 3/26

(21) Application number: **91202758.8**

(22) Date of filing: **24.10.1991**

(54) **Temperature dependent current generator**

Temperaturabhängiger Stromgenerator

Générateur de courant dépendant de la température

(84) Designated Contracting States:
**DE FR GB**

(43) Date of publication of application:
**26.05.1993 Bulletin 1993/21**

(73) Proprietor: **DELCO ELECTRONICS CORPORATION**
**Kokomo Indiana 46902 (US)**

(72) Inventors:
• **Kearney, Mark Billings**
**Kokomo, Indiana 46902 (US)**
• **Michael, Jeffrey Allen**
**Bloomington, Indiana 47401 (US)**
• **Koglin, Dennis Michael**
**Indiana 46032 (US)**

(74) Representative: **Denton, Michael John et al**
**Patent Section**
**1st Floor**
**Gideon House**
**28 Chapel Street**
**Luton Bedfordshire LU1 2SE (GB)**

(56) References cited:
**EP-A- 0 140 677**          **US-A- 4 475 077**

• **PATENT ABSTRACTS OF JAPAN vol. 008, no. 153 (P-287)17 July 1984 & JP-A-59 052 321**
• **ELECTRONICS LETTERS vol. 26, no. 10, 1 May 1990, STEVENAGE,HERTS.,GB pages 619 - 621; CHUNG ET AL: 'BIPOLAR LINEAR TRANSCONDUCTOR'**

## Description

This invention relates to a current generator having an adjustable temperature dependence.

There are many electronic applications where it is desirable to have a circuit which generates a current that varies as a function of temperature, and such circuits exist. However, there are other applications where it is desirable for the current generating circuit to be adjustable, to be able to achieve a linear temperature dependence, and to be suitable for use in integrated circuitry.

For example, an instrumentation circuit for an automobile or other vehicle may rely on a transducer input. The transducer supplies a signal to an amplifier circuit in response to an input stimulus. This signal typically has a DC offset voltage, and may vary with temperature as the transducer may have a temperature dependent characteristic. At the output of the amplification circuit is the amplified transducer signal. What is desired is a signal proportional to the input stimulus to the transducer but independent of temperature. This may be accomplished by establishing a gain in the amplifying section that is temperature dependent in such a manner as to compensate for the temperature variation in sensitivity of the transducer. Typically, a summation stage is added for further offsetting the output following amplification such that the output is in a usable voltage range.

If the transducer in the above circuitry is of the piezo-resistive type, it may exhibit sensitivities that decrease with increasing temperature in a hyperbolic fashion. In these cases it is desirable to have a corresponding amplifier gain that increases linearly with temperature such that the overall transfer function is temperature independent. However, problems arise when the signal from the transducer includes an offset term, as this term also is multiplied by the temperature dependent gain term. Although the offset of the transducer may typically be temperature independent, when multiplied by the temperature dependent gain of the amplifier, the offset becomes temperature dependent.

One known method of eliminating temperature dependence of the offset term appearing at the output is by employing a means of trimming out the offset in the transducer. In many cases, however, this is not practical because the exact value of the transducer offset may not be known until the amplification and compensation circuitry has been added. In those cases, another method of offset compensation may be desirable.

Electronics letters, vol 26, no 10, Stevenage, GB, at pages 619-621 published an article by W.Chung et al entitled "Bipolar Linear Transconductor". The transconductor circuit described added two external transistors into the emitter-coupled pair of a conventional transconductance circuit.

JP-A-59/52,321 discloses a temperature compensated current source which includes first and second current sources the outputs of which are added together and then fed to a third current source before passing through a current mirror. The first and second current sources have opposite temperature coefficients.

The present invention seeks to provide an improved temperature dependent current generator.

According to an aspect of the present invention, there is provided a current generator for supplying an output current having an adjustable temperature dependence as specified in claim 1.

The present invention can provide an adjustable temperature dependent current generator which is ideal for providing offset compensation at the output of the amplifying stage of the above described circuitry.

In one embodiment, there is used a unique combination of a transconductance current multiplier, a current mirror, two temperature dependent current generating circuits and a current source to generate currents capable of having the relation:

$$(1) \qquad I_t = G_c(A - B)/(A + B),$$

where $I_t$ is the output current, $G_c$ is the desired gain of the current generator which can be adjusted to match the temperature dependent gain of the transducer or amplifier which the output current is used to offset, and A and B are variables which change with temperature. The circuit can further be adjusted so that:

$$(2) \qquad (A - B)/(A + B) = K(T - T_o),$$

where T is the temperature of the circuit, K is a proportionality constant, and $T_o$ is a predetermined temperature which may be an arbitrary test temperature. By achieving the function in equation (2) above, the circuit acquires a linear temperature dependence which can match the temperature dependence of many transducers. One advantage of this embodiment is that $G_c$ and $T_o$ are adjustable allowing the current generator to match the various characteristics of various possible circuit designs which require a temperature dependent current source. Other embodiments of the invention include other circuit elements but may still achieve the above function.

Structurally, this embodiment is a current generator comprising a first circuit including a transconductance current multiplier comprising four transistors which in part define four primary current paths through which four currents flow. The first circuit also includes a current mirror comprising two transistors coupled to the transconductance current multiplier. An output current path, through which the current $I_t$ flows is also part of the first circuit. Two current generating circuits generate two of the primary currents as a function of temperature, achieving the temperature dependence of the current generator. Finally, a temperature independent current control means controls the other two primary currents defining the gain of the current generator.

An embodiment of the present invention is described below, by way of illustration only, with reference to the accompanying drawings, in which:

Figure 1 is a circuit diagram of an instrumentation circuit providing temperature compensation in which the present invention may be implemented;

Figure 2 is a circuit diagram of the instrumentation circuit of Figure 1 provided with an embodiment of adjustable temperature dependent current generator;

Figure 3 is a circuit diagram of one implementation of the adjustable temperature dependent current generator of Figure 2, useful for cancelling negative offset voltages;

Figure 4 is a circuit diagram of a second implementation of the adjustable temperature dependent current generator of Figure 2, useful for cancelling positive offset voltages; and

Figure 5 is a circuit diagram of a third implementation of the adjustable temperature dependent current generator of Figure 2, useful for cancelling either positive or negative offset voltages.

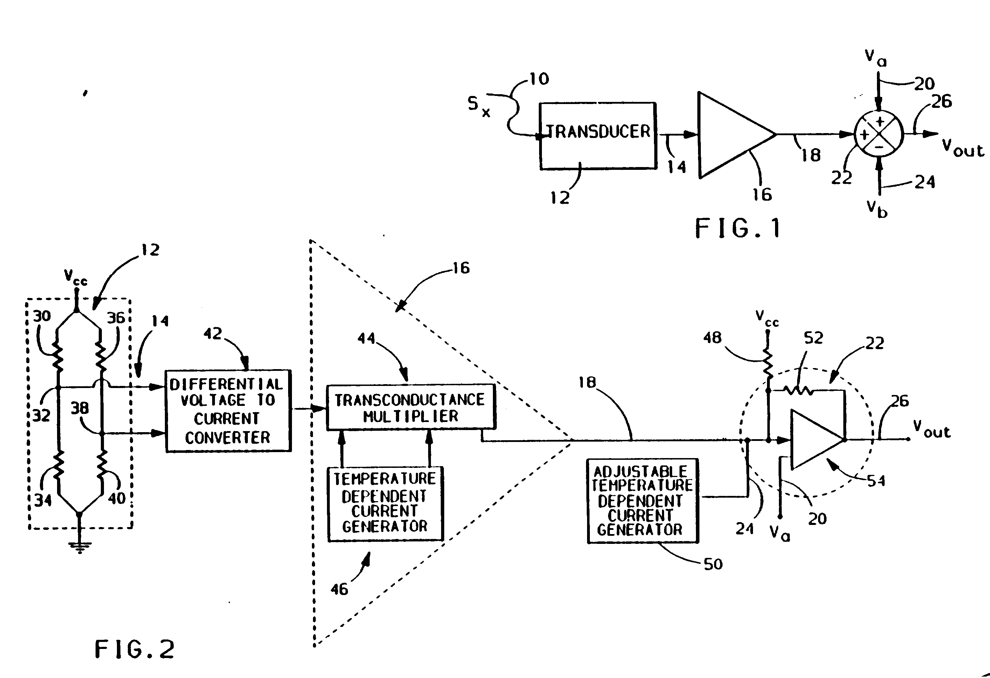

Referring to Figure 1, a preferred embodiment of the present invention is for use with instrumentation circuitry. A parameter to be measured applies a physical stimulus 10 to a transducer 12 which may be a piezo-resistive pressure cell as shown in Figure 2 and which produces an output signal on line 14 which relates to the input stimulus through the function $G_x[T]$, where T is the temperature of the transducer. The transducer output signal on line 14 typically includes an offset voltage which may or may not be temperature dependent. For purposes of this explanation, the offset voltage is not temperature dependent, but as explained below, is input into a temperature dependent amplification stage 16 and, as a result, becomes temperature dependent.

The signal on line 14 is input into the temperature dependent amplifier 16, which has a gain of $A_x[T]$. The circuitry is suitable for integration onto a chip and can easily be packaged into a small package with the transducer so that the transducer temperature and the amplification and other circuitry temperatures are substantially identical. The temperature dependence of the gain of amplifier 16 is adjusted to compensate for the temperature dependence of the transducer 12 so that the amplifier output has the desired relation to the parameter being measured. However, as indicated above, the amplifier 16 also multiplies the transducer offset voltage by a temperature dependent factor. The resultant temperature dependent offset factor is included in the amplifier output at line 18.

An example of circuitry for the transducer 12 and the amplifier stage 16 is set forth in United States Patent No. 4,883,992.

At summing stage 22, the signal in line 18 is added to an offset voltage, $V_a$, in line 20 so that the signal is in a usable voltage range. The preferred embodiment provides a temperature dependent offset voltage, $V_b$, in line 24 which compensates for the temperature dependent offset signal in line 18. Assuming that the amplification factor varies with temperature in a substantially linear function, the voltage $V_b$ can be given as:

$$V_b = G_c(T - T_o),$$

where $G_c$ is a gain term, T is temperature, and $T_o$ is a predetermined test temperature. This embodiment allows both $G_c$ and $T_o$ to be adjustable, so it can be used with a variety of different transducer and circuit applications. After temperature dependent offset voltage $V_b$ is added, the resultant signal in line 26 reflects an accurate measure of the parameter independent of temperature. In the detailed circuit explanation below, the voltage signal from the transducer is converted to a current signal, amplified, summed with offset currents, and converted back to a voltage signal.

Referring to Figure 2, the transducer 12 comprises a bridge circuit of piezo-resistors 30, 34, 36 and 40 connected so that a supply voltage $V_{cc}$ is applied to one end of each of piezo-resistors 30 and 36, with ground applied to one end of each of piezo-resistors 34 and 40. The differential bridge output is taken from the junction 32 of piezo-resistors 30 and 34 and the junction 38 of piezo-resistors 36 and 40 and applied to the differential inputs of a differential voltage-to-current converter 42, in which an output current is generated which is proportional to the differential input voltage. This output current is fed to a transconductance multiplier 44, in which it is multiplied by the ratio of a pair of compensation currents generated in temperature dependent current generator 46 to provide a compensated output current. The compensated output current is summed with the temperature dependent offset current, $I_t$ (which is proportional to the desired $V_b$), which is generated by the adjustable temperature dependent current generator 50. The summed currents are converted to an output voltage and amplified in an output amplifier summation circuit 22 comprising an operational amplifier 54 with a feedback or output resistor 52, an offset adjustment resistor 48 and a biasing reference voltage $V_a$. The output on line 26 of amplifier summation circuit 22 is the output voltage, $V_{out}$, and is proportional to the input stimulus to the transducer.

The piezo-resistive bridge pressure cell 12 has the property that there is a single value of the physical input parameter for which the output voltage is temperature independent. For some piezo-resistive pressure cells, this value is a null value: that is, the differential voltage output is zero over the entire usable temperature range. Although all such pressure cells have a point at which the output voltage is independent of temperature, this does not automatically occur at a zero voltage level. Without the benefits of this embodiment, it is necessary for the correct operation of the instrumentation circuitry for the pressure cell to be nulled with the crossing point on the zero voltage axis. As will be explained below, nulling the pressure cell is still desirable with this embodiment as it reduces the amount of offset voltage which must be compensated for.

The pressure cell can be nulled in an elevated temperature wafer test. While the pressure cells are still in silicon wafer form, the cavities are etched to form diaphragms and the cells are electrostatically bonded to a 1.5mm (60 mil) thick glass plate and subjected to output testing at room temperature and an elevated temperature, with trimming adjustment of one of the piezo-resistors to produce the nulled pressure cell output. The testing and adjustment must take place after the cells are electrostatically bonded to the glass, since the bonding process changes the cell characteristics with respect to this variable. The production of a perfectly nulled pressure cell eliminates the requirement of any elevated temperature functional tests of the instrumentation circuitry. However, as it turns out, obtaining perfectly nulled pressure cells is not often practically possible. The result is that there is some offset voltage of the transducer at which the output is temperature independent.

Detailed descriptions of the differential voltage to current converter 42, transconductance multiplier 44, and differential current generator 46 are all explained in detail in United States Patent No. 4,883,992 and will not be further explained herein.

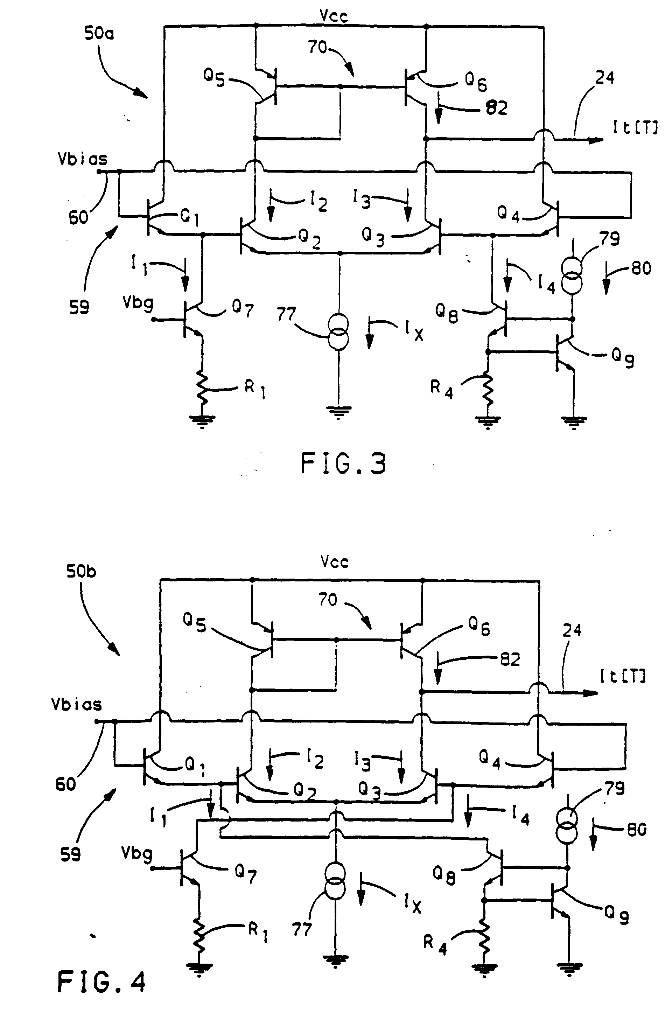

Referring to Figure 3, a circuit diagram of an embodiment of adjustable temperature dependent current generator 50a which compensates for negative offset voltages in the transducer 12 (Figures 1 and 2) is shown. Preferably, this circuit will be integrated into a single chip with the voltage-to-current conversion, amplification, and summation circuits of Figure 2. For the circuit in Figure 3, the transistors all have equivalent emitter areas and are ideally substantially identical to one another. Transistors $Q_1$, $Q_2$, $Q_3$, and $Q_4$ form a transconductance current multiplier 59, biased through line 60 to independent voltage source $V_{bias}$. Transistors $Q_5$ and $Q_6$ form a current mirror circuit 70 which is coupled to transistors $Q_2$ and $Q_3$ as shown.

The transistors $Q_1$, $Q_2$, $Q_3$, and $Q_4$ are all part of current paths through which currents $I_1$, $I_2$, $I_3$, and $I_4$ flow. Current 82 flowing through the transistor $Q_6$ is substantially identical to current $I_2$ because of the current mirror circuit 70. The output current, $I_t[T]$, on line 24 equals the difference of currents $I_2$ and $I_3$. The sum of currents $I_2$ and $I_3$ equals current $I_x$, which is controlled by current source 77. The transconductance current multiplier 59 is a current multiplying circuit having the relation:

$$I_1 I_2 = I_3 I_4.$$

The sum of the base-emitter voltages of transistors $Q_1$

and $Q_2$ equals that of transistors $Q_3$ and $Q_4$. Since the base-emitter voltage is essentially a log function of collector current in the active linear region, the product of the collector currents in transistors $Q_1$ and $Q_2$ equals that of transistors $Q_3$ and $Q_4$. From these relations it can be shown that the output current $I_t$ can be given by:

$$I_t = I_x(I_4 - I_1)/(I_1 + I_4).$$

Since current source 77 is temperature independent, it can be properly adjusted to achieve the desired gain term $G_c$ for the circuit.

Current $I_1$ is controlled in a temperature dependent manner through the first current generating circuit comprising transistor $Q_7$ and resistor $R_1$. The current flowing through the base of transistor $Q_2$ is negligible, so virtually all of current $I_1$ flows though transistor $Q_7$ and resistor $R_1$. Transistor $Q_7$ is forward biased by a temperature independent constant voltage source, supplying voltage $V_{bg}$. In this circuit, the highly linear relationship of the forward base-emitter voltage ($V_{be}$) over temperature of transistor $Q_7$ is used to generate the temperature dependence of current $I_1$. Since the voltage $V_{bg}$ is constant, the voltage between the base of transistor $Q_7$ and the ground connection of resistor $R_1$ is constant. However, as the base-emitter voltage of transistor $Q_7$ changes with temperature, the voltage across resistor $R_1$ changes, altering the current through resistor $R_1$, which is current $I_1$. In this manner, current $I_1$ achieves a linear temperature dependency.

The second current generating circuit, comprising current source 79, transistors $Q_8$ and $Q_9$, and resistor $R_4$, provides the linear temperature dependence of current $I_4$. Current source 79 provides current 80 which forward biases transistor $Q_8$. Resistor $R_4$ is connected across the base and emitter of transistor $Q_9$. Current $I_4$ flows through transistor $Q_4$ down through transistor $Q_8$ and resistor $R_4$. The base-emitter voltage of transistor $Q_9$ has the same temperature dependency as the base-emitter voltage of transistor $Q_7$. As the base-emitter voltage of transistor $Q_9$ linearly changes with temperature, the voltage across resistor $R_4$ changes, altering the current, $I_4$, through resistor $R_4$. In this manner current $I_4$ achieves a temperature dependency, opposite that of current I1.

When the current $I_t[T]$ is desired to have a linear temperature dependency, currents $I_1$ and $I_4$ must relate such that:

$$(I_4 - I_1)/(I_1 + I_4) = K(T - T_o),$$

where K is a proportionality constant and $T_o$ is a test temperature. To achieve the above linear relationship, ideally transistors $Q_1$, $Q_2$, $Q_3$, $Q_4$, $Q_7$, $Q_8$, and $Q_9$ are identical, transistors $Q_5$ and $Q_6$ are identical, and resistors $R_1$ and $R_4$ are identical. $V_{bg}$ is set to twice $V_{beo}$,

which is the base-emitter voltage $V_{be}$ of the transistors at the test temperature $T_o$. In practice, there will be mismatches between the transistors and this can cause an error term in the relation between $I_1$ and $I_4$. To correct the error, resistors $R_1$ and $R_4$ can be adjusted to negate the overall mismatch of the transistors. To accomplish this, the system is first taken to the desired test temperature, $T_o$, where voltage source $V_{bg}$ is adjusted so that $V_{bg} = 2V_{beo}$. While monitoring $I_t[T]$, either $R_4$ or $R_1$ is adjusted such that $It[T = T_o]$ is forced to zero. This assures that the desired relation:

$$I_t[T] = G_c(T - T_o)$$

can be achieved, because the sum of $I_1 + I_4$ is temperature independent. $G_c$ is set by adjustment of current source 77, which controls $I_x$.

The circuit in Figure 3 is desirable when the offset voltage of the transducer is negative. When it is known that the offset voltage of the transducer is positive, the circuit in Figure 4 is preferred. The temperature dependent current generator 50b in Figure 4 is identical to the current generator in Figure 3 except that the collector of transistor $Q_7$ is connected to the emitter of transistor $Q_4$ and the collector of transistor $Q_8$ is connected to the emitter of transistor $Q_1$. As a result of this connection, the output current of $I_t$ is now defined:

$$I_t = -I_x(I_4 - I_1)/(I_1 + I_4).$$

As can be seen, using the circuit in Figure 4, $I_t$ can be used to compensate for positive offset voltages.

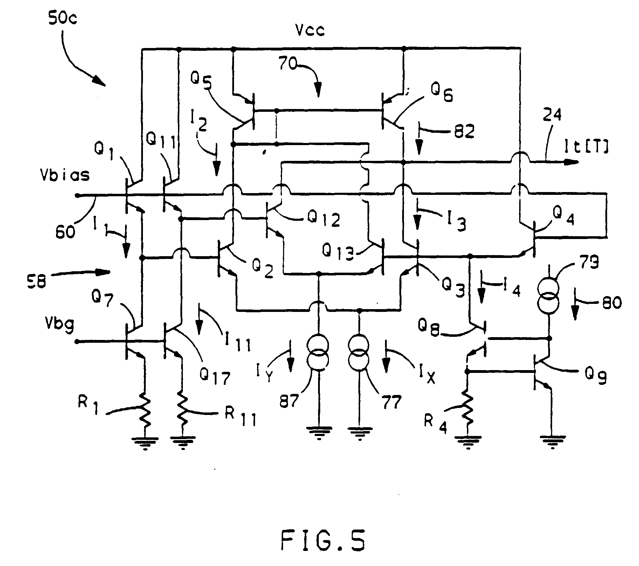

The circuit in Figure 5 is desirable for compensating for both positive and negative offset voltages. Referring to Figure 5, the temperature dependent offset current generator 50c includes a four quadrant transconductance current multiplier 58 comprising transistors $Q_1$, $Q_2$, $Q_3$, $Q_4$, $Q_{11}$, $Q_{12}$, and $Q_{13}$. Transistor $Q_{11}$ is part of a fifth current path and is connected to the base of transistor $Q_1$ as shown. The emitter of transistor $Q_{11}$ is connected to a current generating circuit comprising transistor $Q_{17}$ and resistor $R_{11}$ which are identical to transistor $Q_7$ and resistor $R_1$, respectively. With this circuit arrangement, the current through transistor $Q_{11}$, current $I_{11}$, is identical to the current through transistor $Q_1$.

Transistors $Q_{12}$ and $Q_{13}$ are coupled to the current mirror 70 and a temperature independent current source 87 as shown. The current source 87 controls the current $I_y$, which is the sum of the currents through the transistors $Q_{12}$ and $Q_{13}$. With this circuit arrangement, the output current $I_t$ can be described by:

$$I_t = (I_x - I_y)(I_4 - I_1)/(I_1 + I_4).$$

As can be seen, by adjusting $I_x$ and $I_y$, the circuit can produce both positive and negative temperature dependent currents allowing it to compensate for both positive and negative offset voltages when used with the circuit in Figure 2. Additionally, if resistor $R_1$ equals resistor $R_{11}$, $V_{bg}$ equals $2 V_{beo}$, and resistor $R_4$ is adjusted so that $It[T = T_o]$ equals zero, then the circuit will be temperature dependent in proportion to $(T - T_o)$, so that:

$$I_t[T] = G_c(T - T_o).$$

The circuits described above are not limited to the use of compensation for offset voltages. They can be used anywhere an adjustable temperature dependent current source is desirable, including cameras, timepieces, and other instruments subject to varying temperature conditions.

## Claims

1. A current generator for supplying an output current having an adjustable temperature dependence, comprising a first circuit including (1) a transconductance current multiplier (59), comprising first, second, third and fourth transistors ($Q_1$-$Q_4$) providing respectively first, second, third and fourth primary current paths for respective first, second, third and fourth primary currents ($I_1$-$I_4$), (2) a current mirror, and (3) an output current path (24) through which an output current ($I_t$) in use flows), the output current bearing a relationship to the first and fourth primary currents ($I_1,I_4$) of:

$$I_t = G_c(I_4 - I_1)/(I_1 + I_4),$$

where $I_1$ is the first primary current, $I_4$ is the fourth primary current and $G_c$ is the gain of the current generator; a first current source ($Q_7,R_1,V_{bg}$) for generating the first primary current ($I_1$) ; and a second current source ($79,Q_8,Q_9,R_4$) for generating the fourth primary current ($I_4$) ; characterised in that the current mirror comprises fifth and sixth transistors ($Q_5,Q_6$) coupled to the transconductance current multiplier (59), the fifth transistor ($Q_5$) being connected to the second transistor ($Q_2$), the sixth transistor ($Q_6$) being connected to the third transistor ($Q_3$); in that the output current path (24) is coupled between the third and sixth transistors ($Q_3,Q_6$) ; by control means operative to control the second and third primary currents ($I_2,I_3$) independent of temperature, such that the gain ($G_c$) of the current generator is adjustable independently of temperature; in that the first and second current sources are adapted to have substantially equal and opposite temperature dependencies such that the first and fourth primary currents ($I_1,I_4$) have a relationship to tem-

perature of:

$$(I_4 - I_1)/(I_1 + I_4) = K(T - T_o),$$

where K is a constant, T is the temperature and $T_o$ is a predetermined temperature; and in that the control means (77) includes an adjustable temperature independent current source (77) coupled between the second and third transistors $(Q_2,Q_3)$ and ground, and is adapted to supply a current $(I_x)$ substantially equal to the sum of the second and third primary currents $(I_2,I_3)$ which is substantially directly proportional to the gain $(G_c)$ of the current generator.

2. A current generator according to claim 1, wherein the first current source is connected to one of the first and fourth transistors $(Q_1,Q_4)$ and includes a seventh transistor $(Q_7)$, a temperature independent voltage source $(V_{bg})$ connected to the base of the seventh transistor $(Q_7)$, and a first resistor $(R_1)$ connected between the emitter of the seventh transistor $(Q_7)$ and ground, the base-emitter voltage of the seventh transistor $(Q_7)$ being adapted to change as a function of temperature thereby to alter the voltage across the first resistor $(R_1)$ and the respective one of the first and second primary currents $(I_1,I_4)$ as functions of temperature; and the second current source is connected to the other of the first and fourth transistors $(Q_1,Q_4)$ and includes eighth and ninth transistors $(Q_8,Q_9)$, a temperature independent current source (79) adapted to forward bias the eighth transistor $(Q_8)$, and a second resistor $(R_4)$ connected between the base of the ninth transistor $(Q_9)$ and ground, the base-emitter voltage of the ninth transistor $(Q_9)$ being adapted to change as a function of temperature, thereby to alter the voltage across the second resistor $(R_4)$ and the respective other one of the first and fourth primary currents $(I_1, I_4)$ as functions of temperature.

3. A current generator according to claim 2, wherein the seventh and ninth transistors $(Q_7,Q_9)$ are substantially identical to one another, the first and second resistors $(R_1,R_4)$ are substantially identical to one another, and the voltage source $(V_{bg})$ is adapted to supply a voltage $(V_{bg})$ substantially twice the base-emitter voltages of the seventh and ninth transistors $(Q_7,Q_9)$ at a predetermined temperature $(T_o)$ such that as the temperature (T) of the current generator changes, the relationship between the first and fourth primary currents $(I_1,I_4)$ changes on the basis of:

$$(I_4 - I_1)/(I_1 + I_4) = K(T - T_o),$$

the terms of which are as herein defined.

4. A current generator according to any preceding claim, wherein the transconductance current multiplier is a four quadrant transconductance current multiplier (58) and comprises tenth, eleventh and twelfth transistors $(Q_{11},Q_{12},Q_{13})$ providing respectively fifth, sixth and seventh current paths for respective fifth, sixth and seventh currents $(I_{11},I_{12}, I_{13})$, the fifth current $(I_{11})$ being substantially equal to the first primary current $(I_1)$ ; the control means (77,87) being adapted to control the sixth and seventh currents $(I_{12},I_{13})$ independently of temperature and of the second and third primary currents $(I_2,I_3)$ ; the current generator comprising a third temperature dependent current source $(Q_{17},R_{11})$ adapted to generate the fifth current $(I_{11})$.

5. A current generator according to claim 4, wherein the third current source and the first current source have a substantially equal temperature dependency.

6. A current generator according to claim 4 or 5, wherein the third current source includes a thirteenth transistor $(Q_{17})$ having its base connected to the or a temperature independent voltage source $(V_{bg})$ and a third resistor $(R_{11})$ connected between the emitter of the thirteenth transistor $(Q_{17})$ and ground, the base-emitter voltage of the thirteenth transistor $(Q_{17})$ being adapted to change as a function of temperature thereby to alter the voltage across the third resistor $(R_{11})$ and the fifth current $(I_{11})$ as functions of temperature.

7. A current generator according to claim 6, wherein the thirteenth transistor $(Q_{17})$ is substantially identical to the transistors $(Q_7,Q_9)$ or to transistors of the first current source, the third resistor $(R_{11})$ is substantially identical to the resistors $(R_1,R_4)$ or to resistors of the first and second current sources, and the voltage source $(V_{bg})$ is adapted to supply a voltage $(V_{bg})$ substantially equal to twice the base-emitter voltage of the thirteenth transistor $(Q_{17})$ at a predetermined temperature $(T_o)$ such that as the temperature (T) of the current generator changes, the relationship between the first and second primary currents $(I_1,I_4)$ is adapted to change on the basis of:

$$(I_4 - I_1)/(I_1 + I_4) = K(T - T_o),$$

the terms of which are as herein defined.

8. A current generator according to any one of claims 4 to 7, wherein the control means (77,87) includes first and second adjustable temperature independent current sources (77,78), the first adjustable current source (77) being coupled between the second and third transistors ($Q_2$, $Q_3$) and ground and adapted to supply a current ($I_x$) substantially equal to the sum of the second and third currents ($I_2$, $I_3$); the second adjustable current source (87) being coupled between the eleventh and twelfth transistors ($Q_{12}$, $Q_{13}$) and ground and adapted to supply a current ($I_y$) substantially equal to the sum of the sixth and seventh currents ($I_{12}$, $I_{13}$), wherein the difference between the currents of the first and second adjustable current sources (77,87) is adapted to be substantially directly proportional to the gain ($G_c$) of the current generator.

## Patentansprüche

1. Ein Stromgenerator zum Liefern eines Ausgangsstromes, der eine einstellbare Temperaturabhängigkeit aufweist, mit einem ersten Schaltkreis mit (1) einem Transkonduktanzstrommultiplizierer (59), mit ersten, zweiten, dritten und vierten Transistoren ($Q_1$ - $Q_4$), die respektive erste, zweite, dritte und vierte Primärstrompfade für respektive erste, zweite, dritte und vierte Primärströme ($I_1$-$I_4$) vorsehen, (2) einem Stromspiegel, und (3) einem Ausgangsstrompfad (24), durch welchen ein Ausgangsstrom ($I_t$) im Gebrauch fließt, wobei der Ausgangsstrom eine Beziehung zu den ersten und vierten Primärströmen ($I_1$, $I_4$) trägt von:

$$I_t = G_c (I_4 - I_1)/(I_1 + I_4),$$

wobei $I_1$ der erste Primärstrom ist, $I_4$ der vierte Primärstrom ist und $G_c$ die Verstärkung des Stromgenerators; einer ersten Stromquelle ($Q_7$, $R_1$, $V_{bg}$) zum Erzeugen des ersten Primärstromes ($I_1$) ; und einer zweiten Stromquelle (79, $Q_8$, $Q_9$, $R_4$) zur Erzeugung des vierten Primärstromes ($I_4$); dadurch gekennzeichnet, daß der Stromspiegel fünfte und sechste Transistoren ($Q_5$, $Q_6$) umfaßt, die an den Transkonduktanzstrommultiplizierer (59) gekoppelt sind, wobei der fünfte Transistor ($Q_5$) mit dem zweiten Transistor ($Q_2$) verbunden ist, der sechste Transistor ($Q_6$) mit dem dritten Transistor ($Q_3$) verbunden ist; dadurch, daß der Ausgangsstrompfad (24) zwischen die dritten und sechsten Transistoren ($Q_3$, $Q_6$) gekoppelt ist; durch ein Steuermittel, das wirksam ist, um die zweiten und dritten Primärströme ($I_2$, $I_3$) unabhängig von der Temperatur zu steuern, derart, daß die Verstärkung ($G_c$) des Stromgenerators unabhängig von der Temperatur einstellbar ist; dadurch, daß die ersten und zweiten Stromquellen dazu angepaßt sind, im wesentlichen gleiche und entgegengesetzte Temperaturabhängigkeiten derart aufzuweisen, daß die ersten und vierten Primärströme ($I_1$, $I_4$) eine Beziehung zur Temperatur auf-

weisen von:

$$(I_4 - I_1)/(I_1 + I_4) = K(T - T_o),$$

wobei K eine Konstante ist, T die Temperatur ist und $T_o$ eine vorbestimmte Temperatur ist; und dadurch, daß das Steuermittel (77) eine einstellbare temperaturunabhängige Stromquelle (77) umfaßt, die zwischen die zweiten und dritten Transistoren ($Q_2$, $Q_3$) und Masse gekoppelt ist und angepaßt ist, einen Strom ($I_x$) im wesentlichen gleich der Summe der zweiten und dritten Primärströme ($I_2$, $I_3$) zu liefern, welche im wesentlichen der Verstärkung ($G_c$) des Stromgenerators direkt proportional ist.

2. Ein Stromgenerator nach Anspruch 1, worin die erste Stromquelle mit einem der ersten und vierten Transistoren ($Q_1$, $Q_4$) verbunden ist und einen siebten Transistor ($Q_7$) umfaßt, eine temperaturunabhängige Spannungsquelle ($V_{bg}$), die mit der Basis des siebten Transistors ($Q_7$) verbunden ist, und einen ersten Widerstand ($R_1$), der zwischen den Emitter des siebten Transistors ($Q_7$) und Masse geschaltet ist, wobei die Basis-Emitterspannung des siebten Transistors ($Q_7$) angepaßt ist, sich als eine Funktion der Temperatur zu ändern, um dadurch die Spannung über den ersten Widerstand ($R_1$) und den respektiven einen der ersten und zweiten Primärströme ($I_1$, $I_4$) als Funktionen der Temperatur zu ändern; und die zweite Stromquelle an den anderen der ersten und vierten Transistoren ($Q_1$, $Q_4$) geschaltet ist, und achte und neunte Transistoren ($Q_8$, $Q_9$), eine temperaturunabhängige Stromquelle (79), die dazu angepaßt ist, den achten Transistor ($Q_8$) vorwärts zu spannen, und einen zweiten Widerstand ($R_4$) umfaßt, der zwischen die Basis des neunten Transistors ($Q_9$) und Masse geschaltet ist, wobei die Basis-Emitterspannung des neunten Transistors ($Q_9$) dazu angepaßt ist, sich als eine Funktion der Temperatur zu ändern, um dadurch die Spannung über den zweiten Widerstand ($R_4$) und den Respektiven anderen der ersten und vierten Primärströme ($I_1$, $I_4$) als Funktionen der Temperatur zu ändern.

3. Ein Stromgenerator nach Anspruch 2, worin die siebten und neunten Transistoren ($Q_7$, $Q_9$) einander im wesentlichen identisch sind, die ersten und zweiten Widerstände ($R_1$, $R_4$) einander im wesentlichen identisch sind, und die Spannungsquelle ($V_{bg}$) dazu angepaßt ist, einer Spannung ($V_{bg}$) im wesentlichen gleich zweimal der Basis-Emitterspannungen der siebten und neunten Transistoren ($Q_7$, $Q_9$) bei einer vorbestimmten Temperatur ($T_o$) derart zu liefern, daß, wenn die Temperatur (T) des Stromgenerators sich ändert, die Beziehung zwischen den ersten und vierten Primärströmen ($I_1$, $I_4$) sich auf

der Basis ändert von:

$$(I_4 - I_1) / (I_1 + I_4) = K(T - T_o),$$

deren Ausdrücke wie hierin definiert sind.

**4.** Ein Stromgenerator nach einem vorhergehenden Anspruch, worin der Transkonduktanzstrommultiplizierer ein Vier-Quadrantentranskonduktanzstrommultiplizierer (58) ist, und zehnte, elfte und zwölfte Transistoren ($Q_{11}$, $Q_{12}$, $Q_{13}$) umfaßt, die respektive fünfte, sechste und siebte Strompfade für respektive fünfte, sechste und siebte Ströme ($I_{11}$, $I_{12}$, $I_{13}$) vorsehen, wobei der fünfte Strom ($I_{11}$) dem ersten Primärstrom ($I_1$) im wesentlichen gleich ist; wobei das Steuermittel (77, 87) dazu angepaßt ist, die sechsten und siebten Ströme ($I_{12}$, $I_{13}$) unabhängig von der Temperatur und von den zweiten und dritten Primärströmen ($I_2$, $I_3$) zu steuern; der Stromgenerator eine dritte temperaturabhängige Stromquelle ($Q_{17}$, $R_{11}$) aufweist, die dazu angepaßt ist, den fünften Strom ($I_{11}$) zu erzeugen.

**5.** Ein Stromgenerator nach Anspruch 4, worin die dritte Stromquelle und die erste Stromquelle eine im wesentlichen gleiche Temperaturabhängigkeit aufweisen.

**6.** Ein Stromgenerator nach Anspruch 4 oder 5, worin die dritte Stromquelle einen dreizehnten Transistor ($Q_{17}$), dessen Basis an die oder eine temperaturunabhängige Spannungsquelle ($V_{bg}$) geschaltet ist, und einen dritten Widerstand ($R_{11}$), der zwischen den Emitter des dreizehnten Transistors ($Q_{17}$) und Masse geschaltet ist, umfaßt, wobei die Basis-Emitterspannung des dreizehnten Transistors ($Q_{17}$) dazu angepaßt ist, sich als eine Funktion der Temperatur zu ändern, um dadurch die Spannung über den dritten Widerstand ($R_{11}$) und den fünften Strom ($I_{11}$) als Funktionen der Temperatur zu ändern.

**7.** Ein Stromgenerator nach Anspruch 6, worin der dreizehnte Transistor ($Q_{17}$) im wesentlichen den Transistoren ($Q_7$, $Q_9$) identisch ist, oder den Transistoren der ersten Stromquelle, der dritte Widerstand ($R_{11}$) den Widerständen ($R_1$, $R_4$) oder Widerständen der ersten und zweiten Stromquellen im wesentlichen identisch ist und die Spannungsquelle ($V_{bg}$) dazu angepaßt ist, eine Spannung ($V_{bg}$) im wesentlichen gleich zweimal der Basis-Emitterspannung des dreizehnten Transistors ($Q_{17}$) bei einer vorbestimmten Temperatur ($T_o$) zu liefern, derart, daß, wenn die Temperatur (T) des Stromgenerators sich ändert, die Beziehung zwischen den ersten und zweiten Primärströmen ($I_1$, $I_4$) dazu angepaßt ist, sich auf der Basis zu ändern von:

$$(I_4 - I_1)/(I_1 + I_4) = K(T - T_o),$$

deren Ausdrücke wie hierin definiert sind.

**8.** Ein Stromgenerator nach einem der Ansprüche 4 bis 7, worin das Steuermittel (77, 87) erste und zweite einstellbare temperaturunabhängige Stromquellen (77, 78) umfaßt, wobei die erste einstellbare Stromquelle (77) zwischen die zweiten und dritten Transistoren ($Q_2$, $Q_3$) und Masse gekoppelt und angepaßt ist, einen Strom ($I_x$) im wesentlichen gleich der Summe der zweiten und dritten Ströme ($I_2$, $I_3$) zu liefern; wobei die zweite einstellbare Stromquelle (87) zwischen die elften und zwölften Transistoren ($Q_{12}$, $Q_{13}$) und Masse gekoppelt und dazu angepaßt ist, einen Strom ($I_y$) im wesentlichen gleich der Summe der sechsten und siebten Ströme ($I_{12}$, $I_{13}$) zu liefern, worin die Differenz zwischen den Strömen der ersten und zweiten einstellbaren Stromquellen (77, 87) dazu angepaßt ist, im wesentlichen der Verstärkung ($G_c$) des Stromgenerators direkt proportional zu sein.

**Revendications**

**1.** Générateur de courant pour appliquer un courant de sortie dépendant de manière réglable de la température, comprenant un premier circuit comportant (1) un multiplicateur (59) de courant à transconductance, comprenant des premier, deuxième, troisième et quatrième transistors ($Q_1$-$Q_4$) fournissant respectivement des premier, deuxième, troisième et quatrième trajets de courant primaire, respectivement pour des premier, deuxième, troisième et quatrième courants primaires ($I_1$-$I_4$), (2) un miroir de courant, et (3) un trajet (24) de courant de sortie dans lequel circule un courant de sortie ($I_t$) en cours d'utilisation, le courant de sortie satisfaisant à la relation suivante avec les premier et quatrième courants primaires ($I_1$, $I_4$) :

$$I_t = G_c (I_4 - I_1) / (I_1 + I_4),$$

$I_1$ étant le premier courant primaire, $I_4$ étant le quatrième courant primaire et $G_c$ étant le gain du générateur de courant; une première source de courant ($Q_7$, $R_1$, $V_{bg}$) pour générer le premier courant primaire ($I_1$); et une deuxième source de courant (79, $Q_8$, $Q_9$, $R_4$) pour générer le quatrième courant primaire ($I_4$); caractérisé en ce que le miroir de courant comprend des cinquième et sixième transistors ($Q_5$, $Q_6$) couplés au multiplicateur (59) de courant à transconductance, le cinquième transistor ($Q_5$) étant connecté au deuxième transistor ($Q_2$), le sixième transistor ($Q_6$) étant connecté au troisième

transistor ($Q_3$); en ce que le trajet (24) du courant de sortie est couplé entre les troisième et sixième transistors ($Q_3$, $Q_6$); par un moyen de commande opérationnel pour commander les deuxième et troisième courants primaires ($I_2$, $I_3$) indépendamment de la température, de telle sorte que le gain ($G_c$) du générateur de courant est réglable indépendamment de la température; en ce que les première et deuxième sources de courant sont aptes à dépendre de la température de manières sensiblement égales et opposées, de telle sorte que les premier et quatrième courants primaires ($I_1$, $I_4$) satisfont à la relation suivante avec la température:

$$(I_4 - I_1) / (I_1 + I_4) = K (T - T_0)$$

où K est une constante, T est la température et $T_0$ est une température prédéterminée; et en ce que le moyen de commande (77) comporte une source de courant (77) réglable indépendamment de la température, couplée entre les deuxième et troisième transistors ($Q_2$, $Q_3$) et la masse, et est apte à appliquer un courant ($I_x$) sensiblement égal à la somme des deuxième et troisième courants primaires ($I_2$, $I_3$), qui est sensiblement directement proportionnel au gain ($G_c$) du générateur de courant.

2. Générateur de courant selon la revendication 1, dans lequel la première source de courant est connectée à l'un des premier et quatrième transistors ($Q_1$, $Q_4$) et comporte un septième transistor ($Q_7$), une source de tension ($V_{bg}$) indépendante de la température connectée à la base du septième transistor ($Q_7$), et une première résistance ($R_1$) connectée entre l'émetteur du septième transistor ($Q_7$) et la masse, la tension base-émetteur du septième transistor ($Q_7$) étant apte à varier en fonction de la température afin de modifier la tension aux bornes de la première résistance ($R_1$) et un courant respectif parmi les premier et deuxième courants primaires ($I_1$, $I_4$) en fonction de la température; et la deuxième source de courant est connectée à l'autre des premier et quatrième transistors ($Q_1$, $Q_4$) et comporte des huitième et neuvième transistors ($Q_8$, $Q_9$), une source de courant (79) indépendante de la température apte à polariser dans le sens direct le huitième transistor ($Q_8$), et une deuxième résistance ($R_4$) connectée entre la base du neuvième transistor ($Q_9$) et la masse, la tension base-émetteur du neuvième transistor ($Q_9$) étant apte à varier en fonction de la température, afin de modifier la tension aux bornes de la deuxième résistance ($R_4$) et l'autre courant respectif parmi les premier et quatrième courants primaires ($I_1$, $I_4$) en fonction de la température.

3. Générateur de courant selon la revendication 2, dans lequel les septième et neuvième transistors ($Q_7$, $Q_9$) sont sensiblement identiques entre eux, la première et la deuxième résistances ($R_1$, $R_4$) sont sensiblement identiques entre elles, et la source de tension ($V_{bg}$) est apte à appliquer une tension ($V_{bg}$) sensiblement le double des tensions base-émetteur des septième et neuvième transistors ($Q_7$, $Q_9$) à une température prédéterminée ($T_o$), de telle sorte que lorsque la température (T) du générateur de courant varie, la relation entre les premier et quatrième courants primaires ($I_1$, $I_4$) varie sur la base suivante:

$$(I_4 - I_1) / (I_1 + I_4) = K (T - T_0)$$

dont les termes sont tels que définis ici.

4. Générateur de courant selon l'une quelconque des revendications précédentes, dans lequel le multiplicateur de courant à transconductance est un multiplicateur (58) de courant à transconductance à quatre quadrants et comprend des dixième, onzième et douzième transistors ($Q_{11}$, $Q_{12}$, $Q_{13}$) fournissant respectivement des cinquième, sixième et septième trajets de courant pour les cinquième, sixième et septième courants respectifs ($I_{11}$, $I_{12}$, $I_{13}$), le cinquième courant ($I_{11}$) étant sensiblement égal au premier courant primaire ($I_1$); le moyen de commande (77, 87) étant apte à commander les sixième et septième courants ($I_{12}$, $I_{13}$) indépendamment de la température et des deuxième et troisième courants primaires ($I_2$, $I_3$); le générateur de courant comprenant une troisième source de courant ($Q_{17}$, $R_{11}$) dépendante de la température apte à générer le cinquième courant ($I_{11}$).

5. Générateur de courant selon la revendication 4, dans lequel la troisième source de courant et la première source de courant dépendent de la température de manière sensiblement égale.

6. Générateur de courant selon la revendication 4 ou 5, dans lequel la troisième source de courant comporte un treizième transistor ($Q_{17}$) dont la base est connectée à la ou à une, source de tension ($V_{bg}$) indépendante de la température et une troisième résistance ($R_{11}$) connectée entre l'émetteur du treizième transistor ($Q_{17}$) et la masse, la tension base-émetteur du treizième transistor ($Q_{17}$) étant apte à varier en fonction de la température afin de modifier la tension aux bornes de la troisième résistance ($R_{11}$) et le cinquième courant ($I_{11}$) en fonction de la température.

7. Générateur de courant selon la revendication 6, dans lequel le treizième transistor ($Q_{17}$) est sensiblement identique aux transistors ($Q_7$, $Q_9$) ou aux

transistors de la première source de courant, la troisième résistance ($R_{11}$) est sensiblement identique aux résistances ($R_1$, $R_4$) ou aux résistances des première et deuxième sources de courant, et la source de tension ($V_{bg}$) est apte à appliquer une tension ($V_{bg}$) sensiblement égale au double de la tension base-émetteur du treizième transistor ($Q_{17}$) à une température prédéterminée ($T_0$), de telle sorte que lorsque la température ($T$) du générateur de courant varie, la relation entre les premier et deuxième courants primaires ($I_1$, $I_4$) est apte à varier sur la base suivante:

$$(I_4 - I_1) / (I_1 + I_4) = K (T - T_0)$$

dont les termes sont tels que définis ici.

8.  Générateur de courant selon l'une quelconque des revendications 4 à 7, dans lequel le moyen de commande (77, 87) comporte des première et deuxième sources de courant (77, 78) réglables et indépendantes de la température, la première source de courant réglable (77) étant couplée entre les deuxième et troisième transistors ($Q_2$, $Q_3$) et la masse et apte à appliquer un courant ($I_x$) sensiblement égal à la somme des deuxième et troisième courants ($I_2$, $I_3$); la deuxième source de courant réglable (87) étant couplée entre les onzième et douzième transistors ($Q_{12}$, $Q_{13}$) et la masse et apte à appliquer un courant ($I_y$) sensiblement égal à la somme des sixième et septième courants ($I_{12}$, $I_{13}$), la différence entre les courants des première et deuxième sources de courant réglables (77, 87) étant apte à être sensiblement directement proportionnelle au gain ($G_c$) du générateur de courant.

EP 0 543 056 B1

$S_x$ — 10

TRANSDUCER 12 — 14 — 16 — 18

$V_a$ — 20 — 26

22 — 24

$V_b$

$V_{out}$

FIG.1

$V_{cc}$ — 12

30 — 36 — 14

32 — 38 — 34 — 40

DIFFERENTIAL VOLTAGE TO CURRENT CONVERTER — 42

16 — 44

TRANSCONDUCTANCE MULTIPLIER

TEMPERATURE DEPENDENT CURRENT GENERATOR — 46

18

48 — 52 — 22 — 26

$V_{out}$

ADJUSTABLE TEMPERATURE DEPENDENT CURRENT GENERATOR — 50

24 — $V_a$ — 20 — 54

$V_{cc}$

FIG.2

FIG.3

FIG.4

FIG.5